# FASCICULE DE BREVET EUROPEEN

(11) **EP 2 446 736 B1**
(45) Date de publication et mention de la délivrance du brevet: **20.02.2013**
(21) Numéro de dépôt: 11181639.3
(22) Date de dépôt: 16.09.2011
(51) Int. Cl.: A01K 1/03

(54) **Cage pour animaux, en particulier pour lapins**
Tierkäfig, insbesondere für Kaninchen
Cage for animals, in particular for rabbits

(30) Priorité: 27.10.2010 FR 1058812
(43) Date de publication de la demande: 02.05.2012
(73) Titulaire: Boutin, Alexandra, 44119 Grandchamp des Fontaines (FR)
(72) Inventeur: Boutin, Alexandra, 44119 Grandchamp des Fontaines (FR)
(74) Mandataire: Godineau, Valérie

(56) Documents cités:
- BE-A- 336 954
- BE-A- 442 535
- DE-A1- 2 614 226

## Description

La présente invention concerne une cage pour animaux, en particulier pour lapins.

Elle concerne plus particulièrement une cage de forme générale parallélépipédique, comprenant un bâti et au moins un bac de réception d'animal, appelé bac de vie, insérable de manière amovible à l'intérieur dudit bâti, ledit bâti étant formé au moins d'un plancher, d'un toit, de trois parois périphériques reliant le plancher et le toit, et d'une porte frontale par l'intermédiaire de laquelle le ou chaque bac de vie est introduit à l'intérieur de la cage délimitée par ledit bâti, le ou chaque bac de vie étant un bac, de forme rectangulaire ou carrée, comportant un fond bordé d'un rebord périphérique délimitant avec ledit fond un bac à quatre coins, à savoir deux coins, dits avant, aptes à jouxter la porte frontale et deux coins, dits arrière, jouxtant la paroi périphérique arrière du bâti, à l'état inséré du bac de vie dans ledit bâti.

De telles cages sont bien connues à celles versées dans cet art, comme l'illustre en particulier le brevet allemand DE-2614226. Elles nécessitent, notamment dans le cas des cages à lapins, de garnir le fond du bac de vie d'une litière à base de copeaux. Cette litière doit être changée régulièrement en raison du développement de mauvaises odeurs liées à la présence et à l'accumulation des déjections.

Un but de la présente invention est donc de proposer une cage pour animaux du type précité, dont la conception permet de faciliter l'entretien la cage et de réduire le développement de mauvaises odeurs à l'intérieur de ladite cage.

A cet effet, l'invention a pour objet une cage pour animaux, en particulier pour lapins, ladite cage, de forme générale parallélépipédique, comprenant un bâti et au moins un bac de réception d'animal, appelé bac de vie, insérable de manière amovible à l'intérieur dudit bâti, ledit bâti étant formé au moins d'un plancher, d'un toit, de trois parois périphériques reliant le plancher et le toit et d'une porte frontale par l'intermédiaire de laquelle le ou chaque bac de vie est introduit à l'intérieur de la cage délimitée par ledit bâti, le ou chaque bac de vie étant un bac de forme rectangulaire ou carrée comportant un fond bordé d'un rebord périphérique délimitant, avec ledit fond, un bac à quatre coins, à savoir deux coins, dits avant, aptes à jouxter la porte frontale et deux coins, dits arrière, jouxtant la paroi périphérique arrière du bâti, à l'état inséré du bac de vie dans ledit bâti, caractérisée en ce que la cage comporte en outre des moyens d'évacuation des déjections de l'animal, lesdits moyens d'évacuation comprenant au moins deux ouvertures traversantes d'évacuation des déjections, dites ouvertures d'angle, ménagées dans le fond du bac de vie au niveau de chaque coin arrière dudit bac de vie, deux conduits de transport des déjections par écoulement gravitaire et un collecteur des déjections positionnable à l'extérieur de la cage, chaque conduit de transport étant positionnable dans une position active dans laquelle il traverse une paroi périphérique, de préférence la paroi périphérique arrière, du bâti de cage et comporte au moins une section de conduit, dite principale, extérieure à la cage, et dont une extrémité, dite inférieure, est apte à déboucher dans le collecteur de déjections et une section de conduit, dite auxiliaire, dont l'extrémité opposée à celle raccordée à la section de conduit principale est disposée, à l'intérieur de la cage, sous l'une des ouvertures traversantes d'évacuation des déjections du bac de vie.

La présence d'un collecteur de déjections à l'extérieur de la cage permet une vidange aisée de ce dernier sans avoir à sortir le bac de vie et l'animal de la cage comme dans l'état de la technique. Il en résulte un gain de temps important et la possibilité d'augmenter la fréquence de vidange dudit collecteur.

De préférence, les parois périphériques en regard, dites latérales, jouxtant la paroi périphérique arrière du bâti sont munies chacune d'au moins un chemin de guidage du genre rail, glissière ou coulisse le long duquel ledit bac de vie est apte à coulisser lors de son introduction ou de sa sortie de la cage, lesdits chemins de guidage, en disposition parallèle, étant inclinés à pente descendante depuis la face avant obturable du bâti vers la paroi périphérique arrière du bâti.

Cette disposition permet notamment à l'urine de s'écouler par gravité vers la partie arrière du bac de vie pour être évacuée à travers les ouvertures d'angle ménagées dans le fond du bac de vie.

De préférence, les ouvertures traversantes d'évacuation des déjections, dites ouvertures d'angle, ménagées dans le fond du bac de vie, au niveau de chaque coin arrière dudit bac, sont fermées à l'aide d'une paroi grillagée coulissante montée mobile entre une position dégagée de l'ouverture et une position d'obturation partielle de ladite ouverture.

Cette disposition permet, en présence par exemple de lapereaux dans la cage, d'éviter à ces derniers de passer à travers l'ouverture.

De préférence, la cage est une cage à bâti modulaire, ledit bâti comportant un élément de base formé du plancher, du toit et de trois parois périphériques aptes à relier le plancher et le toit et d'une porte frontale et au moins un jeu de réhausses des parois périphériques de l'élément de base, ledit jeu de réhausses étant intégrable entre le toit et les parois périphériques de l'élément de base pour augmenter la hauteur dudit bâti et permettre la mise en place d'au moins un bac de vie supplémentaire, ladite cage comportant en outre, par jeu de réhausses, au moins une porte supplémentaire apte à fermer l'étage supplémentaire formé par le jeu de réhausses.

Cette construction modulaire permet de manière aisée d'augmenter le nombre d'étages dans la cage. Dans ce mode de réalisation, de préférence, la cage comporte n bacs de vie et, pour chaque conduit de transport des déjections, n sections de conduit, dites auxiliaires, lesdites n sections de conduit, dites auxiliaires, débouchant dans une section de conduit principale commune.

En raison d'une section de conduit principale commune à l'ensemble des sections de conduit auxiliaires, le nombre de collecteurs de déjections est inchangé quel que soit le nombre de bacs de vie dans la cage. Il en résulte, à nouveau, une simplicité de l'entretien de la cage.

L'invention sera bien comprise à la lecture de la description suivante d'exemples de réalisation, en référence aux dessins annexés dans lesquels :

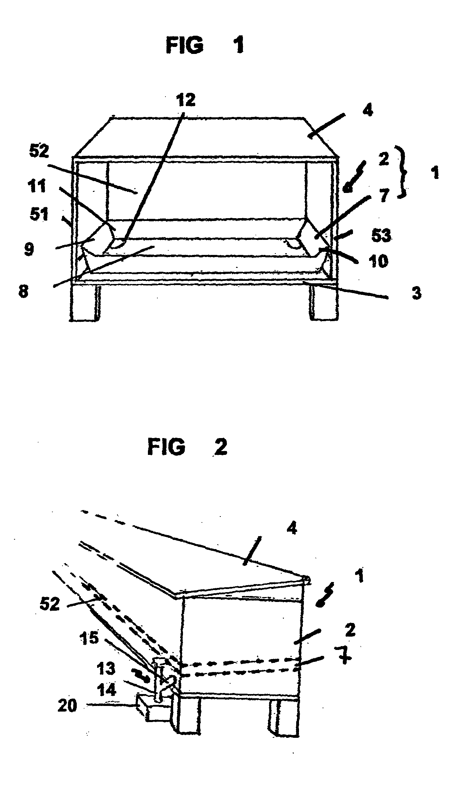

La figure 1 représente une vue de face en perspective d'une cage à un étage, la porte frontale ayant été omise ;
La figure 2 représente une vue trois-quart arrière de la cage de la figure 1 ;
La figure 3 représente une vue de face en perspective d'une cage à deux étages, la porte frontale ayant été omise ;
La figure 4 représente une vue trois-quart arrière de la cage de la figure 3 ;
La figure 5 représente une vue schématique simplifiée de la porte frontale ;
La figure 6 représente une vue en perspective par le dessous d'un bac de vie conforme à l'invention.

Comme mentionné ci-dessus, la cage 1 pour animaux, objet de l'invention, est plus particulièrement destinée à l'élevage de lapins.

Cette cage comprend un bâti 2 de forme générale parallélépipédique, et au moins un bac 7 de réception d'animal, appelé bac 7 de vie. Ce bac 7 de vie est insérable de manière amovible à l'intérieur du bâti. Le bâti 2 est, quant à lui, formé au moins d'un plancher 3, d'un toit 4, et de parois périphériques, à savoir deux parois périphériques latérales 51, 53 et une paroi périphérique arrière 52 reliant le plancher 3 et le toit 4. Ledit bâti comporte encore une porte 6 frontale par l'intermédiaire de laquelle le ou chaque bac 7 de vie est introduit à l'intérieur de la cage délimitée par ledit bâti 2. De préférence, la cage 1 se présente sous la forme d'un ensemble prêt à monter. Les parois périphériques son assemblées par emboîtement au plancher. De même, la liaison entre toit et parois périphériques est une liaison par emboîtement.

Dans les exemples représentés, la porte 6 frontale est une porte en treillis munie d'une fenêtre 18 coulissante.

Le ou chaque bac 7 de vie est, quant à lui, un bac de forme rectangulaire ou carrée comportant un fond 8 généralement plat bordé d'un rebord 9 périphérique de préférence épaulé. Ce bord 9 périphérique délimite avec le fond 8 un bac à quatre coins ou angles, à savoir deux coins 10, dits avant, aptes à jouxter la porte 6 frontale en position fermée de cette dernière, et deux coins 11, dits arrière, jouxtant la paroi 52 périphérique arrière du bâti 2 à l'état inséré du bac 7 de vie dans ledit bâti 2.

Dans les exemples représentés, le ou chaque bac 7 de vie est un bac métallique.

L'utilisation de métal permet d'éviter que l'animal ronge le bac 7 de vie et facilite le nettoyage du bac de vie au chalumeau.

De manière caractéristique à l'invention, la cage 1 comporte en outre des moyens d'évacuation des déjections de l'animal. Lesdits moyens d'évacuation comprennent au moins :
- deux ouvertures 12 traversantes d'évacuation des déjections, dites ouvertures 12 d'angle, ménagées dans le fond 8 du bac 7 de vie au niveau de chaque coin 11 arrière dudit bac 7 de vie,
- deux conduits 13 de transport des déjections par écoulement gravitaire et
- un collecteur 20 des déjections positionnable à l'extérieur de la cage 1.

Chaque conduit 13 de transport est apte à occuper au moins une position dite active dans laquelle il traverse l'une des parois 51, 52, 53 périphériques, de préférence la paroi 52 périphérique arrière, du bâti 2 de cage et comporte, dans ladite position active, au moins une section 14 de conduit, dite principale, extérieure à la cage 1, et dont une extrémité, dite inférieure, est apte à déboucher dans le collecteur 20 de déjections et une section 15 de conduit, dite auxiliaire, dont l'extrémité opposée à celle raccordée à la section 14 de conduit principale est disposée, à l'intérieur de la cage, sous l'une des ouvertures 12 traversantes d'évacuation des déjections du bac 7 de vie.

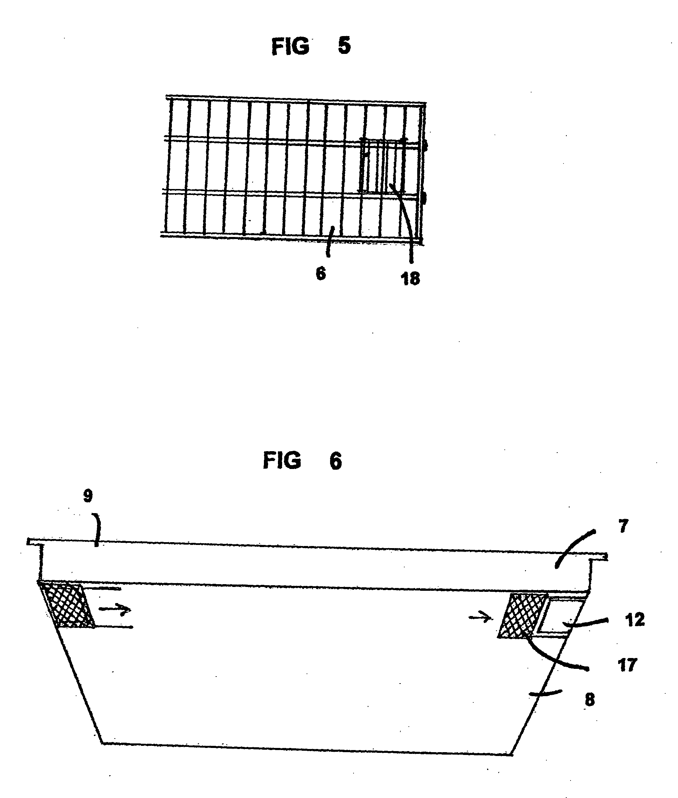

Dans l'exemple représenté à la figure 6, les ouvertures 12 traversantes d'évacuation des déjections dites ouvertures d'angle ménagées dans le fond 8 du bac 7 de vie au niveau de chaque coin 11 arrière dudit bac sont fermées à l'aide d'une paroi 17 grillagée coulissante montée mobile entre une position dégagée de l'ouverture 12 et une position d'obturation partielle de ladite ouverture 12.

La position d'obturation est sélectionnée en présence de petits animaux dans le bac de vie. Le collecteur 20 de déjections est, quant à lui, soit un bac unique disposé de manière à s'étendre sous l'extrémité inférieure de la section de conduit principale des deux conduits de transport de déjections équipant la cage, soit sous forme de plusieurs, en l'occurrence deux bacs, disposés chacun sous l'extrémité inférieure de la section 14 de conduit principale d'un conduit de transport comme dans l'exemple représenté.

De préférence, la cage 1 est une cage à bâti 2 modulaire. Ledit bâti 2 comporte, d'une part, un élément de base formé du plancher 3, du toit 4, de trois parois latérales et d'une porte frontale, et d'autre part, au moins un jeu de réhausses 19 des parois 51, 52, 53 périphériques de l'élément de base. Ce jeu de réhausses 19 est intégrable entre le toit 4 et les parois 51, 52, 53 périphériques de l'élément de base pour augmenter la hauteur dudit bâti 2 et permettre la mise en place d'au moins un bac 7 de vie supplémentaire. Ladite cage comporte en outre, par jeu de réhausses 19, au moins une porte supplémentaire apte à fermer l'étage supplémentaire formé par le jeu de réhausses 19.

Pour s'adapter à la conception modulaire du bâti, chaque conduit 13 de transport des déjections est un conduit ajustable en longueur formé d'un assemblage par emboîtement d'éléments de conduit.

De préférence, au moins l'un des éléments de conduit dudit assemblage affecte la forme générale d'un Y dont l'une des branches forme la ou l'une des sections 15 de conduit dite auxiliaire dudit conduit 13 de transport.

De préférence encore, la cage comporte n bacs 7 de vie, n représentant un nombre entier généralement entre 1 et 10, et pour chaque conduit 13 de transport des déjections, n sections 15 de conduit, dites auxiliaires, lesdites n sections de conduit, dites auxiliaires, débouchant dans une section 14 de conduit principale commune.

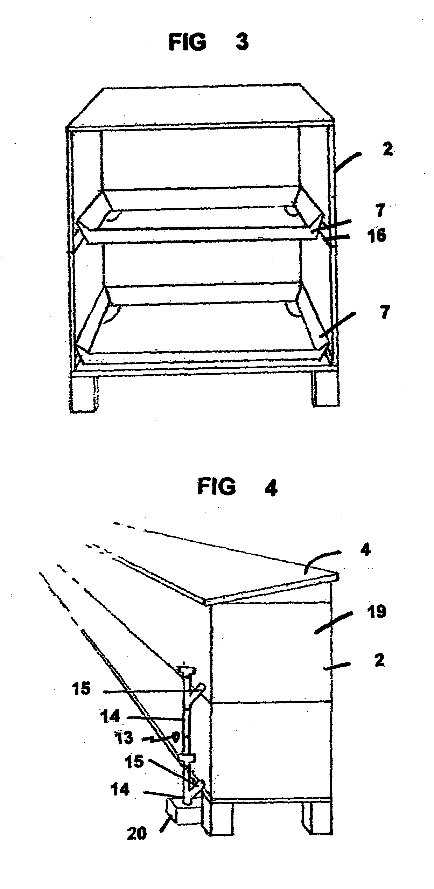

Ainsi dans l'exemple représenté à la figure 4, le bâti loge deux bacs de vie et chaque conduit de transport est formé de deux éléments de conduits en Y et d'un élément de conduit rectiligne reliant les deux éléments de conduits en Y.

Le premier élément de conduit en Y comporte une des branches du Y qui forme l'une des sections 15 de conduit, dites auxiliaires dudit conduit. Cette branche est biseautée à son extrémité libre et vient se positionner au niveau de son extrémité libre sous l'une des ouvertures d'angle du bac de vie inférieur. L'autre branche du Y est raccordée par son extrémité libre à une extrémité de l'élément de conduit rectiligne qui par son autre extrémité se raccorde à la base d'un second élément de conduit en Y. A nouveau, ce second élément de conduit en Y comporte une branche qui forme l'une des sections de conduit auxiliaire du conduit de transport, tandis que l'autre branche est une branche en attente de raccordement à un nouvel élément de conduit et est ici fermée par un bouchon.

Le corps du Y duquel partent lesdites branches forme à chaque fois, éventuellement avec l'une de ses branches, une portion de la section de conduit principale du conduit de transport.

L'une des branches de chaque Y forme donc une ramification d'un tronc creux formé par assemblage desdits éléments de conduit comme l'illustre la figure 4. La base de ce tronc débouche dans le collecteur 20 de déjections. Du fait que chaque bac comporte deux ouvertures, la cage comporte donc deux conduits de transport associés chacun à une ouverture d'angle d'un bac.

Pour permettre l'introduction ou la sortie d'un bac de vie de la cage, les parois 51, 52, 53 périphériques en regard, dites latérales, jouxtant la paroi 52 périphérique arrière du bâti 2 sont munies chacune d'au moins un chemin 16 de guidage du genre rail, glissière ou coulisse le long duquel ledit bac 7 de vie est apte à coulisser lors de son introduction ou de sa sortie de la cage 1. Lesdits chemins 16 de guidage, en disposition parallèle, sont inclinés à pente descendante depuis la face avant obturable du bâti 2 vers la paroi 52 périphérique arrière du bâti 2.

Pour faciliter ce déplacement à coulissement, chaque bac de vie comporte donc un rebord épaulé comme l'illustre la figure 6.

La mise en place du bac de vie dans la cage s'opère après ouverture de la porte 6 frontale qui est, ici, une porte pivotante autour d'un axe vertical. Cette porte est reliée au reste du bâti, en particulier à une paroi périphérique latérale du bâti par des charnières.

La fenêtre 18 coulissante ménagée à l'intérieur de la porte, permet d'accéder à l'intérieur de la cage sans avoir à ouvrir toute la porte. Le plancher du bâti est, ici, équipé de pieds permettant une surélévation du plancher. Une partie du bac 20 collecteur de déjections peut donc être glissé sous le plancher pour être au moins partiellement masquée par ce dernier.

La vidange des bacs 20 collecteurs de déjections extérieurs à la cage et disposés à l'arrière de ladite cage peut s'opérer de manière aisée sans avoir à accéder à l'intérieur de la cage.

## Revendications

1. Cage (1) pour animaux, en particulier pour lapins, ladite cage (1), de forme générale parallélépipédique, comprenant un bâti (2) et au moins un bac (7) de réception d'animal, appelé bac (7) de vie, insérable de manière amovible à l'intérieur dudit bâti (2), ledit bâti (2) étant formé au moins d'un plancher (3), d'un toit (4),de trois parois (51, 52, 53) périphériques reliant le plancher (3) et le toit (4) et d'une porte (6) frontale par l'intermédiaire de laquelle le ou chaque bac (7) de vie est introduit à l'intérieur de la cage délimitée par ledit bâti (2), le ou chaque bac (7) de vie étant un bac de forme rectangulaire ou carrée comportant un fond (8) bordé d'un rebord (9) périphérique délimitant avec ledit fond (8) un bac à quatre coins, à savoir deux coins (10), dits avant, aptes à jouxter la porte (6) frontale et deux coins (11), dits arrière, jouxtant la paroi (52) périphérique arrière du bâti (2) à l'état inséré du bac (7) de vie dans ledit bâti (2),
**caractérisée en ce que** la cage (1) comporte en outre des moyens d'évacuation des déjections de l'animal, lesdits moyens d'évacuation comprenant au moins deux ouvertures (12) traversantes d'évacuation des déjections, dites ouvertures (12) d'angle, ménagées dans le fond (8) du bac (7) de vie au niveau de chaque coin (11) arrière dudit bac (7) de vie, deux conduits (13) de transport des déjections par écoulement gravitaire et un collecteur (20) des déjections positionnable à l'extérieur de la cage (1), chaque conduit (13) de transport étant positionnable dans une position dans laquelle il traverse une paroi (51, 52, 53) périphérique, de préférence la paroi (52) périphérique arrière, du bâti (2) de cage et comporte au moins une section (14) de conduit, dite principale, extérieure à la cage (1), et dont une extrémité, dite inférieure, est apte à déboucher dans le collecteur (20) de déjections et une section (15) de conduit, dite auxiliaire, dont l'extrémité opposée à celle raccordée à la section (14) de conduit principale est disposée, à l'intérieur de la cage, sous l'une des ouvertures (12) traversantes d'évacuation des déjections du bac (7) de vie.

2. Cage (1) pour animaux selon la revendication 1,
**caractérisée en ce que** les parois (51, 52, 53) périphériques en regard, dites latérales, jouxtant la paroi (52) périphérique arrière du bâti (2) sont munies chacune d'au moins un chemin (16) de guidage du genre rail, glissière ou coulisse le long duquel ledit bac (7) de vie est apte à coulisser lors de son introduction ou de sa sortie de la cage (1), lesdits chemins (16)de guidage, en disposition parallèle, étant inclinés à pente descendante depuis la face avant obturable du bâti (2) vers la paroi (52) périphérique arrière du bâti (2).

3. Cage (1) pour animaux selon l'une des revendications précédentes,
**caractérisée en ce que** le ou chaque bac (7) de vie est un bac métallique.

4. Cage (1) pour animaux selon l'une des revendications précédentes,
**caractérisée en ce que** les ouvertures (12) traversantes d'évacuation des déjections dites ouvertures d'angle ménagées dans le fond (8) du bac (7) de vie au niveau de chaque coin (11) arrière dudit bac sont fermées à l'aide d'une paroi (17) grillagée coulissante montée mobile entre une position dégagée de l'ouverture (12) et une position d'obturation partielle de ladite ouverture (12).

5. Cage (1) pour animaux selon l'une des revendications précédentes,
**caractérisée en ce que** la porte (6) frontale est une porte en treillis munie d'une fenêtre (18) coulissante.

6. Cage (1) pour animaux selon l'une des revendications précédentes,
**caractérisée en ce que** la cage (1) est une cage à bâti (2) modulaire, ledit bâti (2) comportant un élément de base formé du plancher (3), du toit (4) et de trois parois périphériques aptes à relier le plancher (3) et le toit (4) et d'une porte (6) frontale et au moins un jeu de réhausses (19) des parois (51, 52, 53) périphériques de l'élément de base, ledit jeu de réhausses étant intégrable entre le toit (4) et les parois (51, 52, 53) périphériques de l'élément de base pour augmenter la hauteur dudit bâti (2) et permettre la mise en place d'au moins un bac (7) de vie supplémentaire, ladite cage comportant en outre, par jeu de réhausses (19), au moins une porte supplémentaire apte à fermer l'étage supplémentaire formé par le jeu de réhausses (19).

7. Cage (1) pour animaux selon l'une des revendications précédentes,
caractérisée en ce chaque conduit (13) de transport des déjections est un conduit ajustable en longueur formé d'un assemblage par emboîtement d'éléments de conduit.

8. Cage (1) pour animaux selon la revendication 7,
**caractérisée en ce qu'**au moins l'un des éléments de conduit dudit assemblage affecte la forme générale d'un Y dont l'une des branches forme la ou l'une des sections (15) de conduit dite auxiliaire dudit conduit (13) de transport.

9. Cage (1) pour animaux selon l'une des revendications précédentes,
**caractérisée en ce qu'**elle comporte n bacs (7) de vie et, pour chaque conduit (13) de transport des déjections, n sections (15) de conduit, dites auxiliaires, lesdites n sections de conduit, dites auxiliaires, débouchant dans une section (14) de conduit principale commune.

10. Cage (1) pour animaux selon l'une des revendications précédentes,
**caractérisée en ce que** la cage (1) se présente sous la forme d'un ensemble prêt à monter.

## Claims

1. A cage (1) for animals, in particular for rabbits, said cage (1), which has a generally parallelepiped shape, comprising a frame (2) and at least one tray (7) for receiving the animal, called a living tray (7), which may be removably inserted inside said frame (2), said frame (2) being formed by at least one floor (3), a roof (4), three peripheral walls (51, 52, 53) connecting the floor (3) and the roof (4), and a frontal door (6) through which the or each living tray (7) is inserted inside the cage delimited by said frame (2), the or each living tray (7) being a rectangular or square tray including a bottom (8) bordered by a peripheral rim (9) delimiting, with said bottom (8), a tray with four corners, i.e. two so-called front corners (10), which may join the front door (6), and two so called back corners (11), adjoining the back peripheral wall (52) of the frame (2) when said living tray (7) is positioned inserted into said housing (2),
**characterized in that** the cage (1) also includes means for evacuating animal droppings, said evacuating means comprising at least two dropping evacuation through openings (12), called corner openings (12), formed in the bottom (8) of the living tray (7) at each back corner (11) of said living tray (7), two ducts (13) for transporting droppings through gravitational flow, and a dropping collector (20) that can be positioned outside the cage (1), each transport duct (13) being able to be arranged in a position in which it passes through a peripheral wall (51, 52, 53), preferably the back peripheral wall (52), of the cage frame (2) and includes at least one so-called primary duct section (14), outside the cage (1), and whereof a so-called lower end can emerge in the dropping collector (20), and a so-called auxiliary duct section (15), whereof the end opposite that connected to the primary duct section (14) is arranged, inside the cage, under one of the dropping discharge through openings (12) of the living tray (7).

2. The cage (1) for animals according to claim 1,
**characterized in that** the opposite peripheral walls (51, 52, 53), called side walls, adjoining the back peripheral wall (52) of the frame (2) are each provided with at least one guide path (16) of the rail, guideway or slider type along which said living tray (7) can slide when it is inserted into or removed from the cage (1), said guide paths (16), arranged parallel to each other, being inclined with a descending slope from the closable front surface of the frame (2) toward the back peripheral wall (52) of the frame (2).

3. The cage (1) for animals according to one of the preceding claims,
**characterized in that** the or each living tray (7) is a metal tray.

4. The cage (1) for animals according to one of the preceding claims,
**characterized in that** the through openings (12) for evacuating droppings, called corner openings, formed in the bottom (8) of the living tray (7) at each back corner (11) of said tray are closed using a sliding mesh wall (17) mounted movable between a position freeing the opening (12) and a position partially closing off said opening (12).

5. The cage (1) for animals according to one of the preceding claims,
**characterized in that** the frontal wall (6) is a lattice door provided with a sliding window (18).

6. The cage (1) for animals according to one of the preceding claims,
**characterized in that** the cage (1) has a configurable frame (2), said frame (2) including a basic element made up of the floor (3), the roof (4) and three side walls capable of connecting the floor (3) to the roof (4) and a frontal door (6), and at least one set of extensions (19) of the peripheral walls (51, 52, 53) of the basic element, said set of extensions being able to be incorporated between the roof (4) and the peripheral walls (51, 52, 53) of the basic element to increase the height of said frame (2) and allow the placement of at least one additional living tray (7), said cage also including, per set of extensions (19), at least one additional door capable of closing the additional level formed by the set of extensions (19).

7. The cage (1) for animals according to one of the preceding claims,
**characterized in that** each droppings transport duct (13) is a length-adjustable duct formed by a fitting assembly of duct elements.

8. The cage (1) for animals according to claim 7,
**characterized in that** at least one of the duct elements of said assembly generally assumes the shape of a Y whereof one of the branches forms the or one of the so-called auxiliary duct sections (15) of said transport duct (13).

9. The cage (1) for animals according to one of the preceding claims,
**characterized in that** it includes n living trays (7) and, for each transport duct (13) for the droppings, n so-called auxiliary duct sections (15), said n so-called auxiliary duct sections emerging in a shared primary duct section (14).

10. The cage (1) for animals according to one of the preceding claims,
**characterized in that** the cage (1) assumes the form of a ready-to-assemble assembly.

## Patentansprüche

1. Tierkäfig (1), insbesondere für Kaninchen, wobei der Käfig (1), der allgemein eine parallelepipedische Form hat, ein Gestell (2) und mindestens eine Schale (7) für die Aufnahme des Tiers umfasst, die als Aufenthaltsschale (7) bezeichnet wird, die entfernbar in das Gestell (2) einsetzbar ist, wobei das Gestell (2) von mindestens einem Boden (3), einem Dach (4), drei peripheren Wänden (51, 52, 53), die den Boden (3) und das Dach (4) verbinden, und einer frontalen Tür (6) gebildet wird, durch die die oder jede Aufenthaltsschale (7) in den Käfig eingesetzt wird, der von dem Gestell (2) begrenzt wird, wobei die oder jede Aufenthaltsschale (7) eine rechteckige oder quadratische Schale ist, die einen Boden (8) aufweist, der von einem peripheren Rand (9) gesäumt wird, der mit dem Boden (8) eine Schale mit vier Ecken begrenzt, nämlich zwei vorderen Ecken (10), die imstande sind, an die frontale Tür (6) anzugrenzen, und zwei hinteren Ecken (11), die im eingesetzten Zustand der Aufenthaltsschale (7) in das Gestell (2) an die hintere periphere Wand (52) des Gestells (2) angrenzen,
**dadurch gekennzeichnet, dass** der Käfig (1) ferner Ableitungsmittel der Exkremente des Tiers aufweist, wobei die Ableitungsmittel mindestens zwei durchgehende Ableitungsöffnungen (12) der Exkremente, sogenannte Ecköffnungen (12), die in den Boden (8) der Aufenthaltsschale (7) auf Ebene jeder hinteren Ecke (11) der Aufenthaltsschale (7) eingearbeitet sind, zwei Transportleitungen (13) der Exkremente durch Schwerkraftableitung und einen Sammler (20) der Exkremente, der außerhalb des Käfigs (1) positionierbar ist, umfasst, wobei jede Transportleitung (13) in einer Position positionierbar ist, in der sie eine periphere Wand (51, 52, 53), vorzugsweise die hintere periphere Wand (52), des Gestells (2) des Käfigs durchquert und mindestens einen Haupt-Leitungssektor (14) außerhalb des Käfigs (1) aufweist, von dem ein unteres Ende imstande ist, in den Exkrementesammler (20) zu münden, und einen Hilfs-Leitungssektor (15), dessen Ende, das dem Ende gegenüberliegt, das an den Haupt-Leitungssektor (14) angeschlossen ist, im Käfig unter einer der durchgehenden Ableitungsöffnungen (12) der Exkremente der Aufenthaltsschale (7) angeordnet ist.

2. Tierkäfig (1) nach Anspruch 1,
**dadurch gekennzeichnet, dass** gegenüberliegenden peripheren Seitenwände (51, 52, 53), die an die periphere Rückwand (52) des Gestells (2) angrenzen, jeweils mit einem Führungsweg (16) in der Art einer Schiene, Gleitschiene oder Schubleiste ausgestattet sind, auf der die Aufenthaltsschale (7) bei ihrem Einführen oder ihrem Herausnehmen aus dem Käfig (1) imstande ist zu gleiten, wobei die parallel angeordneten Führungswege (16) von der verschließbaren Vorderseite des Gestells (2) zur peripheren Rückseite (52) des Gestells (2) abschüssig geneigt sind.

3. Tierkäfig (1) nach einem der vorangehenden Ansprüche,
**dadurch gekennzeichnet, dass** die oder jede Aufenthaltsschale (7) eine Metallschale ist.

4. Tierkäfig (1) nach einem der vorangehenden Ansprüche,
**dadurch gekennzeichnet, dass** die durchgehenden Ableitungsöffnungen (12) der Exkremente beziehungsweise Ecköffnungen, die in den Boden (8) der Aufenthaltsschale (7) auf Ebene jeder hinteren Ecke (11) der Schale eingearbeitet sind, mit Hilfe einer gleitenden Gitterwand (17) verschlossen werden, die zwischen einer die Öffnung (12) freigebenden Stellung und einer teilweisen Verschlussstellung der Öffnung (12) bewegbar montiert sind.

5. Tierkäfig (1) nach einem der vorangehenden Ansprüche,
**dadurch gekennzeichnet, dass** die frontale Tür (6) eine Tür aus Gitterwerk mit einem Schiebefenster (18) ist.

6. Tierkäfig (1) nach einem der vorangehenden Ansprüche,
**dadurch gekennzeichnet, dass** der Käfig (1) ein Käfig mit modularem Gestell (2) ist, wobei das Gestell (2) ein Basiselement aufweist, das vom Boden (3), vom Dach (4) und von drei peripheren Wänden gebildet wird, die imstande sind, den Boden (3) und das Dach (4) zu verbinden, und einer frontalen Tür (6) und mindestens einem Aufstockungssatz (19) der peripheren Wände (51, 52, 53) des Basiselements, wobei der Aufstockungssatz zwischen dem Dach (4) und den peripheren Wänden (51, 52, 53) des Basiselements integrierbar ist, um die Höhe des Gestells (2) zu erhöhen und die Platzierung von mindestens einer zusätzlichen Aufenthaltsschale (7) zu erlauben, wobei der Käfig ferner je Aufstockungssatz (19) mindestens eine zusätzliche Tür aufweist, die imstande ist, die zusätzliche Etage, die von dem Aufstockungssatz (19) gebildet wird, zu schließen.

7. Tierkäfig (1) nach einem der vorangehenden Ansprüche,
**dadurch gekennzeichnet, dass** jede Transportleitung (13) der Exkremente eine Leitung ist, die der Länge nach einstellbar ist, die von einer Montage einsteckbarer Leitungselemente gebildet wird.

8. Tierkäfig (1) nach Anspruch 7,
**dadurch gekennzeichnet, dass** mindestens eines der Leitungselemente der Montage allgemein Y-förmig ist, von dem einer der Arme den oder einen der Hilfs-Leitungssektoren (15) der Transportleitung (13) bildet.

9. Tierkäfig (1) nach einem der vorangehenden Ansprüche,
**dadurch gekennzeichnet, dass** er n Aufenthaltsschalen (7) und für jede Transportleitung (13) der Exkremente n Hilfs-Leitungssektoren (15) aufweist, wobei die n Hilfs-Leitungssektoren in einen gemeinsamen Haupt-Leitungssektor (14) münden.

10. Tierkäfig (1) nach einem der vorangehenden Ansprüche,
**dadurch gekennzeichnet, dass** der Käfig (1) eine montagefertige Gruppe ist.
